# EUROPÄISCHE PATENTSCHRIFT

(11) **EP 1 050 699 B1**
(45) Veröffentlichungstag und Bekanntmachung des Hinweises auf die Patenterteilung: **25.05.2005**
(21) Anmeldenummer: 00108924.2
(22) Anmeldetag: 27.04.2000
(51) Int. Cl.: F16J 15/00, F16J 13/02, F16L 23/16

(54) **Gegen Leckage sichernde Flanschverbindung für einen mindestens zweiteiligen Behälter**
Flange connection for tanks comprising at least two parts and protecting against leakage
Raccord à brides assurant l'étanchéité de réservoirs comprenant au moins deux éléments

(30) Priorität: 06.05.1999 DE 19920901; 03.07.1999 DE 19930507
(43) Veröffentlichungstag der Anmeldung: 08.11.2000
(73) Patentinhaber: Borsig GmbH, 13507 Berlin (DE); Uhde GmbH, 44141 Dortmund (DE)
(72) Erfinder: Beckesch, Günther, 51674 Wiehl (DE); Maurer, Rainer, 58332 Schwelm (DE)
(74) Vertreter: Radünz, Ingo, Dipl.-Ing.

(56) Entgegenhaltungen:
- DE-A- 2 239 314
- FR-A- 1 146 303

## Beschreibung

Die Erfindung betrifft die Verwendung der nicht schädlichen Gaskomponente eines Gasgemisches als Sperrgas in einer Flanschverbindung.

Salpetersäure wird in großtechnischem Maßstab in Kontaktverfahren durch Oxidation von Ammoniak und Luft gewonnen. In einen mindestens zweiteiligen Behälter wird ein Gemisch von Ammoniak und Luft unter Druck über feingewebte Platinnetze geführt. Der Ablauf der Oxidation ist exotherm. Daher sind in dem Reaktionsbehälter, in dem die Oxidation durchgeführt wird, den Platinnetzen Heizflächenelemente nachgeschaltet. Der obere Teil des Reaktionsbehälters (Brennerhaube) ist mit dem unteren Teil des Behälters über eine Flanschverbindung verbunden, wie dies z. B. schematisch auf den S. 32 und 33 des Prospektes "Anlagen- und Apparatebau/Komponenten und Teilkreisläufe" der Firma L. & C. Steinmüller aus dem Jahre 1986 dargestellt ist. Der obere Teil des Behälters muss betriebsmäßig häufig von dem unteren Teil des Behälters getrennt werden, damit die Katalysatornetze zugänglich sind, was besondere Anforderungen an die Flanschverbindung stellt. Eine Schweißlippendichtung an der Flanschverbindung ist nicht sinnvoll.

Bei einer bekannten Flanschverbindung ist ein Flansch mit einer Nut und der andere Flansch mit einer der Nut zugeordneten Feder versehen. In der Nut ist ein Dichtmittel eingesetzt. Beim Anziehen der für die Verbindung der Flansche vorgesehenen Schraubverbindung wird das Dichtmittel zusammengepresst. Die Flanschverbindung wird vom Behälterinneren her mit einem unter Druck stehenden Gasgemisch beaufschlagt, das eine schädliche Komponente, nämlich das Ammoniak, enthält. Bei der bekannten Flanschverbindung kann Ammoniak enthaltendes Schadgas über die Dichtung austreten.

Aus der DE 22 39 314 A ist ein mit einer doppelten Abdichtung versehener Sicherheitsflansch für eine Rohrleitung zur Förderung von giftigen oder gefährlichen Medien bekannt. Zwischen der innenliegenden und der außenliegenden Dichtung ist ein Sperrgasraum vorgesehen, der durch ein Medium höheren Druckes beaufschlagt ist.

Aus der FR-A-1 146 303 ist eine Flanschverbindung mit einer Doppeldichtung bekannt, bei der zwischen der innenliegenden und der außenliegenden Dichtung eine Ringnut angeordnet ist. Von der Ringnut geht eine nach außen führende Bohrung aus, über die eine Leckage festzustellen ist.

Der Erfindung liegt die Aufgabe zugrunde, für einen mit einer Flanschverbindung versehenen Behälter, der mit einem Gasgemisch aus einer schädlichen und einer nicht schädlichen Gaskomponente beaufschlagt ist, eine Sicherung gegen die Leckage von Schadgas nach außen zu schaffen.

Die Aufgabe wird erfindungsgemäß durch die Merkmale des Anspruches 1 gelöst. Vorteilhafte Ausgestaltungen der Erfindung sind Gegenstand der Unteransprüche

Bei einer Leckage der außenliegenden und gegen den Innendruck abdichtenden Dichtung strömt nicht schädliches Sperrgas zum Behälteraußenraum ab. Bei einer Leckage der innenliegenden Dichtung strömt nicht schädliches Sperrgas infolge eines leichten Überdrucks gegenüber dem Innendruck in das Behälterinnere.

Die Flanschverbindung kann auch bei anderen Prozessen eingesetzt werden, bei denen die Gefahr besteht, dass ein schädliches Gas austritt, wie z. B. bei der Herstellung von Caprolactam (Katalytische Luftoxidation von Cyclohexan), Blausäure (Ammoxidation von Methan), Formaldehyd (Oxidation von Methanol mit Luft), Lachgas, Synthesegas od. dgl..

Die beiden Dichtungen sind als Nut- und Federdichtungen ausgebildet, bei denen jeweils der eine Flansch mit einer Nut und der andere Flansch mit einer der Nut zugeordneten Feder versehen ist und in der Nut ein Dichtmittel angeordnet ist.

Zur Vergrößerung des Strömungsquerschnitts für das Sperrgas dient die sich zur Sperrgaskammer hin öffnende Ringnut zwischen den beiden in einem Flansch ausgebildeten Nuten.

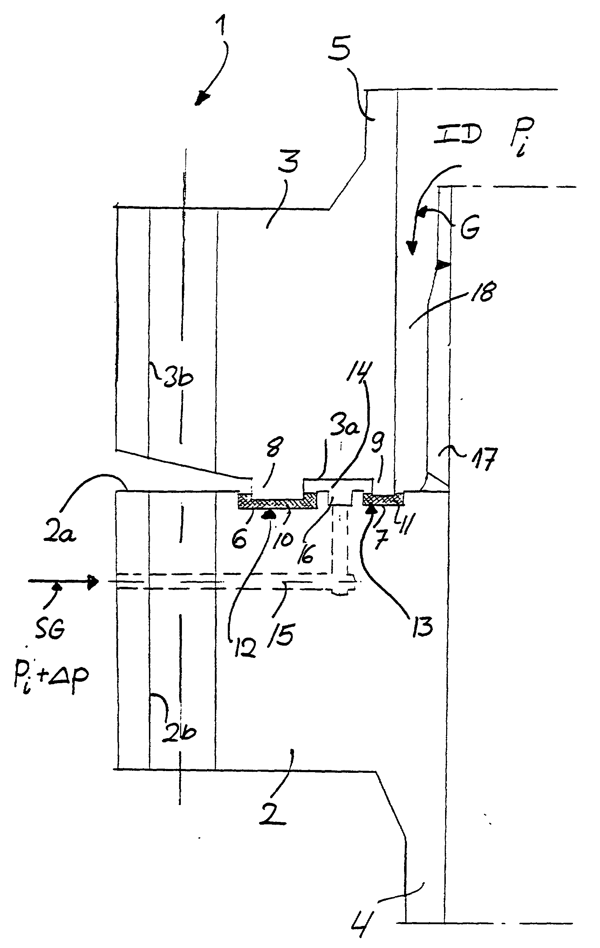

Die Erfindung soll nun anhand der beigefügten Figur näher erläutert werden.

Die Flanschverbindung 1 besteht aus einem unteren Flansch 2 und einem oberen Flansch 3, die in nicht näher dargestellter Weise mit einem unteren Teil 4 bzw. einem oberen Teil 5 eines Behälters verbunden sind. Zum Beispiel können die Flansche 2 und 3 als Aufschweißflansche mit den Behälterwänden verbunden sein.

Auf seiner sich radial erstreckenden Oberseite 2a ist der Flansch 2 mit einer radial außenliegenden Ringnut 6 und mit einer radial innenliegenden Ringnut 7 versehen, wobei die Ringnut 6 eine größere Breite aufweist als die radial innenliegende Ringnut 7; die Tiefe der beiden Nuten ist gleich. Der Flansch 3 ist auf einer sich radial erstreckenden Teilfläche 3a seiner Unterseite mit einer außenliegenden und der Ringnut 6 zugeordneten ringartigen Feder 8 und einer innenliegenden und der Ringnut 7 zugeordneten ringartigen Feder 9 versehen. Die Federn 8 und 9 können einstückig mit dem Flansch ausgebildet sein oder auf die Unterseite aufplattiert sein. Die Breiten der Federn sind kleiner als die Breiten der zugeordneten Ringnuten. Die Breite der Ringfeder 8 ist größer als die Breite der Ringfeder 9. In den Nuten 6 und 7 sind Dichtmittel 10 bzw. 11 eingebracht.

In den Flanschen 2 und 3 sind aufeinander ausgerichtete Durchgangsbohrungen 2b bzw. 3b ausgebildet, in die Schraubbolzen zur Verbindung der beiden Flansche 2 und 3 eingebracht werden können. Die Schraubbolzen sind nicht dargestellt. Beim Beaufschlagen der Flansche 2 und 3 durch die Schraubbolzen greifen die Federn 8 und 9 in die zugeordneten Nuten 6 bzw. 7 unter Komprimierung der Dichtmittel 10 bzw. 11 ein.

Die Elemente 6, 10 und 8 bilden eine erste Dichtung (Außendichtung) 12, die für eine Abdichtung gegenüber dem im Behälter herrschenden Innendruck Pᵢ gewährleistet. Dieser kann z. B. im Bereich von 4 bis 5 bar bei einem Behälter liegen, dessen Oberteil als Brennerhaube eines NH₃-Verbrennungselements dient. Das dort vorhandene Gas ist schädlich, weil es Ammoniak enthält.

Die Elemente 7, 11 und 9 bauen eine Leckagedichtung (Innendichtung) 13 auf.

Zwischen den beiden Ringfedern 8 und 9 ist eine ringförmige Sperrgaskammer 14 ausgebildet, die über mindestens eine Bohrung 15 mit einem Sperrgas beaufschlagbar ist. Das Sperrgas steht unter einem leichten Überdruck Pᵢ + Δp, bezogen auf den Innendruck Pᵢ des Behälters.

Bei Behältern größeren Durchmessers und damit bei Sperrgaskammern großer Länge ist es sinnvoll, die Sperrgaskammer 14 nicht nur über eine Bohrung 15, sondern über eine Vielzahl gleichmäßig über den Umfang der Sperrgaskammer verteilte Bohrungen mit Sperrgas zu beaufschlagen.

Bei Undichtwerden der Außendichtung 12 strömt Sperrgas SG nach außen ab. Bei Undichtwerden der Innendichtung 13 strömt Sperrgas in den Innenraum des Behälters.

Mit der erfindungsgemäßen Verwendung der ausgebildeten Flanschverbindung ist somit der Austritt von unter Druck Pᵢ stehendem Schadgas nach außen sicher verhindert.

Vorzugsweise wird als Sperrgas Luft von dem Kompressor herangeführt, der die für die Oxidation von Ammoniak und Luft erforderliche Luft komprimiert. Der Behälterinnendruck Pᵢ wird wegen des Druckverlustes zwischen Kompressor und Brennerhaube immer etwas kleiner sein als der Kompressorausgangsdruck.

In dem zwischen den beiden Nuten 6 und 7 verbleibenden Steg auf der Fläche 2a des Flansches 2 ist eine weitere ringförmige Ausnehmung 16 vorgesehen, die sich zur Sperrgaskammer 14 hin öffnet und in deren Boden sich die Bohrung 15 öffnet.

Der Strömungsquerschnitt für das Sperrgas in Umfangsrichtung der Flanschverbindung wird durch den nicht von dem Dichtmaterial und den Steg zwischen den Nuten eingenommenen Querschnitt der Sperrgaskammer 14 und den Querschnitt der Ringnut 16 bestimmt, so dass im Falle von Leckagen, die weiter von der Zuführöffnung der Bohrung 15 bzw. der Bohrungen 15 entfernt sind, das Zuströmen von Sperrgas erleichtert wird. Wie aus der Figur ersichtlich ist, ragen die Federn 8 und 9 unter Komprimierung der Dichtmittel 10 und 11 in die Nuten 6 und 7 hinein.

Im Behälterinneren erstreckt sich von der Oberseite des Flansches 2 ein ringartiger Träger 17 nach oben, der die für die Oxidation erforderlichen Platinnetze trägt. Der Träger 17 bildet mit der Innenfläche des Flansches 3, der einen entsprechend größeren Innendurchmesser als Flansch 2 aufweist, einen Ringraum 18, über den die Dichtungen 12 mit dem unter dem Druck Pᵢ stehenden Gas G beaufschlagt werden, wie dies in der Figur durch den Pfeil G symbolisch dargestellt ist.

## Patentansprüche

1. Verwendung der nicht schädlichen Gaskomponente eines aus einer nicht schädlichen und einer schädlichen Gaskomponente bestehenden Gasgemisches als Sperrgas in einer Flanschverbindung für einen zweiteiligen Behälter, bei dem die Flanschverbindung von dem im Behälterinneren unter Druck (Pᵢ) stehenden Gasgemisch beaufschlagt ist, wobei zwischen zwei Flanschen (2, 3) der Flanschverbindung eine erste Dichtung (12) angeordnet ist, die bei Anziehen einer an den beiden Flanschen angreifenden Schraubverbindung abdichtend zusammenpressbar ist, wobei eine bezüglich der ersten Dichtung (12) innenliegende Leckagedichtung (13) ausgebildet ist und zwischen der ersten Dichtung (12) und der Leckagedichtung (13) eine mit den beiden Dichtungen in Verbindung stehende Sperrgaskammer (14) vorgesehen ist, die mit der unter Überdruck (Pᵢ + Δp) gegenüber dem Innendruck (Pᵢ) des Behälters stehenden nicht schädlichen Gaskomponente beaufschlagt ist, wobei die beiden Dichtungen (12, 13) als Nut- und Federdichtungen ausgebildet sind, bei denen jeweils der eine Flansch (2) mit einer Nut (6, 7) und der andere Flansch (3) mit einer der Nut zugeordneten Feder (8, 9) versehen ist und in der Nut (6) ein Dichtmittel (10, 11) angeordnet ist und bei der zwischen den beiden in einem Flansch ausgebildeten Nuten (6, 7) eine sich zur Sperrgaskammer (14) hin öffnende Ringnut (16) ausgebildet ist.

2. Verwendung der nicht schädlichen Gaskomponente als Sperrgas in einer Flanschverbindung nach Anspruch 1, bei der die beiden Dichtungen (12, 13) als Flachdichtungen ausgebildet sind.

3. Verwendung der nicht schädlichen Gaskomponente als Sperrgas in einer Flanschverbindung nach Anspruch 1, bei der in dem einen Flansch (2) sowohl die Nut (6) für die erste Dichtung (12) als auch die Nut (7) für die Leckagedichtung (13) und in dem anderen Flansch (3) die den Nuten zugeordneten Federn (8, 9) ausgebildet sind.

4. Verwendung der nicht schädlichen Gaskomponente als Sperrgas in einer Flanschverbindung nach Anspruch 1 oder 2 für einen Behälter innerhalb einer Anlage zur Erzeugung von Salpetersäure.

## Claims

1. Utilization of the non-harmful gas component of a gas mixture comprising a non-harmful and a harmful gas component, as seal gas in a flanged connection for a bipartite vessel in which the gas mixture standing under pressure (Pi) in the inside of the vessel is admitted to the flanged connection where between two flanges (2, 3) of the flanged connection a first gasket (12) is placed which is compressible and sealing when tightening a screwed connection which engages with both flanges, whereby regarding the first gasket (12) an inside leakage seal (13) is formed and between the first gasket (12) and leakage seal (13) a seal gas chamber (14) is provided, which is connected with both gaskets and to which the non-harmful gas component, which stands under higher pressure (Pi + delta p) than the inside pressure (Pi) of the vessel, is admitted, whereby both gaskets (12, 13) are designed as tongue and groove gaskets, whereby in each case one flange (2) is provided with a groove (6, 7) and the other flange (3) with a tongue (8, 9) corresponding to the groove, and whereby a sealing compound (10, 11) is placed in groove (6) and whereby, between the two grooves (6, 7), a radial groove (16) is formed which is opened towards seal gas chamber (14).

2. Utilization of the non-harmful gas component as seal gas in a flanged connection according to claim 1 whereby the two gaskets (12, 13) are designed as flat gaskets.

3. Utilization of the non-harmful gas component as seal gas in a flanged connection according to claim 1, whereby in one flange (2) groove (6) is designed for the first gasket (12) and groove (7) for leakage seal (13), and in the other flange (3) the tongues (8, 9) corresponding to the grooves.

4. Utilization of the non-harmful gas component as seal gas in a flanged connection according to claim 1 or 2 for a vessel within a plant for the production of nitric acid.

## Revendications

1. Utilisation en tant que gaz de barrage du composant non nocif d'un mélange gazeux constitué d'un composant non nocif et d'un composant nocif dans un assemblage par brides pour un récipient en deux parties, dans laquelle l'assemblage par brides est exposé au mélange gazeux contenu à l'intérieur du récipient sous pression (Pᵢ), entre deux brides (2, 3) de l'assemblage étant disposée une première garniture d'étanchéité (12) qui est compressible en assurant une étanchéité lors du serrage d'un assemblage par vis attaquant les deux brides, une garniture de fuite (13), située intérieurement par rapport à la première garniture (12), étant réalisée et en liaison avec les deux garnitures étant prévu entre la première garniture d'étanchéité (12) et la garniture de fuite (13) un compartiment de gaz de barrage (14) qui est exposé au composant gazeux non nocif en surpression (Pᵢ + Δp) par rapport à la pression interne (Pᵢ) du récipient, les deux garnitures (12, 13) étant configurées sous forme de garnitures à rainures et languettes dans chacune desquelles l'une des brides (2) est munie d'une rainure (6, 7) et l'autre bride (3) d'une languette (8, 9) associée à la rainure et un moyen d'étanchéité (10, 11) est disposé dans la rainure (6, 7), et dans laquelle une rainure annulaire (16) s'ouvrant en direction du compartiment de gaz de barrage (14) est réalisée entre les deux rainures (6, 7) prévues dans une bride.

2. Utilisation du composant gazeux non nocif en tant que gaz de barrage dans un assemblage par brides suivant la revendication 1, dans laquelle les deux garnitures (12, 13) sont configurées sous forme de garnitures plates.

3. Utilisation du composant gazeux non nocif en tant que gaz de barrage dans un assemblage par brides suivant la revendication 1, dans laquelle aussi bien la rainure (6) pour la première garniture d'étanchéité (12) que la rainure (7) pour la garniture de fuite (13) sont réalisées dans l'une des brides (2) et les languettes (8, 9) associées aux rainures sont réalisées dans l'autre bride (3).

4. Utilisation du composant gazeux non nocif en tant que gaz de barrage dans un assemblage par brides suivant l'une des revendications 1 et 2 pour un récipient à l'intérieur d'une installation de production d'acide nitrique.
